Europäisches Patentamt

European Patent Office

Office européen des brevets

(19)

(11) Veröffentlichungsnummer: **0 150 065**
**B1**

(12)

# EUROPÄISCHE PATENTSCHRIFT

(45) Veröffentlichungstag der Patentschrift:
**11.05.88**

(21) Anmeldenummer: **85100530.6**

(22) Anmeldetag: **18.01.85**

(51) Int. Cl.⁴: **B 60 R 22/20**

(54) Höhenverstellbare Befestigungs- oder Umlenkvorrichtung für den Sicherheitsgurt eines Sicherheitssystems in Kraftfahrzeugen.

(30) Priorität: **19.01.84 DE 8401390 U**
**26.04.84 DE 8412788 U**

(43) Veröffentlichungstag der Anmeldung:
**31.07.85 Patentblatt 85/31**

(45) Bekanntmachung des Hinweises auf die Patenterteilung:
**11.05.88 Patentblatt 88/19**

(84) Benannte Vertragsstaaten:
**AT BE DE FR GB IT NL SE**

(56) Entgegenhaltungen:
**FR - A - 2 479 694**

(73) Patentinhaber: **AUTOLIV GmbH, Otto-Hahn-Strasse 4, D-2200 Elmshorn (DE)**

(72) Erfinder: **Essler, Karl Hermann, Koppeldamm 20, D-2082 Tornesch (DE)**
Erfinder: **Grunewald, Hans Joachim, Dipl.-Ing., Moordamm 5, D-2201 Kiebitzreihe (DE)**
Erfinder: **Hennings, Reinhold, Bauerweg 1a, D-2200 Raa-Besenbek (DE)**

(74) Vertreter: **Patentanwälte Dipl.-Ing. J. Richter Dipl.-Ing. F. Werdermann, Neuer Wall 10, D-2000 Hamburg 36 (DE)**

## Beschreibung

Die Erfindung betrifft eine höhenverstellbare Befestigungs- oder Umlenkvorrichtung für den Sicherheitsgurt eines Sicherheitssystems in Kraftfahrzeugen, bestehend aus einer an einem Fahrzeugbauteil, wie B-Säule, angebrachten Führungsschiene mit einem Führungsschlitz mit Ausnehmungen, in der ein Sperrglied eines den Befestigungs- oder Umlenkbeschlag, der eine Öse mit einem Schlitz zum Hindurchführen des Gurtbandes aufweist, tragenden schlittenartigen Gleitstückes oder Schlittens eingreift, wobei der Schlitten gleitflächenseitig mit Kunststoffteilen versehen ist oder Beschichtungen aus Kunststofen aufweist und wobei der Schlitten mittels einer Bremseinrichtung gegen ein selbsttätiges Herabgleiten in der Führungsschiene in dieser sicherbar ist.

Eine solche höhenverstellbare Befestigungs- oder Umlenkvorrichtung für den Sicherheitsgurt eines Sicherheitssystems in Kraftfahrzeugen ist aus der FR-A-2 479 694 bekannt. Bei dieser Vorrichtung besteht das Sperrglied aus einem mittels einer Druckfeder beaufschlagten, mit einer Handhabe versehenen Sperrstift, der Schwierigkeiten in der Handhabung insofern mit sich bringt, als die zur Aufnahme des Sperrstiftes vorgesehenen Einrastöffnungen durch Verschieben des Schlittens aufgefunden werden müssen, und weist der Sperrstift keine ausreichende Gleitfähigkeit auf, dann ist ein Einrasten des Sperrstiftes in die jeweilige Einrastöffnung nicht gewährleistet, d.h. es ist keine ausreichende Funktionssicherheit gegeben. Ausserdem wird mit der vorgesehenen Bremseinrichtung keine Erhöhung der Reibkraft zwischen dem Schlitten und der Gleitfläche der Führungsschiene erreicht, da keine auf den Schlitten einwirkende Klinke vorgesehen ist, vermittels der die Bremswirkung erhöht werden kann. Der Schlitten selbst weist ein U-Profil auf, dessen beide Schenkelenden U-förmig abgebogen sind. Die auf der Führungsschiene gleitenden Profilabschnitte sind mit je einer Kunststoffbeschichtung versehen. Diese Teilkunststoffbeschichtung verhindert jedoch nicht das Entstehen von störenden Geräuschen; der Schlitten ist nicht geräuschfrei in der Führungsschiene haltbar.

Eine weitere bekannte Vorrichtung zur stufenweisen Höhenverstellung des oberen Befestigungs- oder Umlenkbeschlages für den Schultergurt eines Sicherheitsgurtsystems in Kraftfahrzeugen geht aus der DE-A-3 139 624 hervor. Diese besteht aus einer an einem Fahrzeugbauteil angebrachten Führungsschiene mit einem Führungsschlitz und mit Ausnehmungen, in die wenigstens ein zugeordnetes Sperrglied eines den Beschlag tragenden Gleitstückes eingreift, wobei zur Betätigung des Sperrgliedes eine Handhabe vorgesehen ist. Zur Vermeidung von unbeabsichtigten Entriegelungen des Beschlages sowie zur Gewährleistung einer sicheren Verriegelung auch bei einem Unfall ist eine Ausgestaltung vorgesehen, bei der die Handhabe drehbeweglich gelagert und mit dem Sperrglied derart gekoppelt ist, dass das Gleitstück mittels der Handhabe zur Höhenverstellung entriegelbar ist.

Nachteilig bei in Führungsschienen gehaltenen und geführten Gleitstücke aufweisenden Befestigungs- oder Umlenkvorrichtungen für Sicherheitsgurte ist, dass das Gleitstück in der Führungsschiene nicht geräuschfrei gehalten ist und dass darüber hinaus bei einer Betätigung der Verstelleinrichtung das Gleitstück aufgrund des vom Gurtband ausgeübten Zuges auf den Befestigungs- oder Umlenkbeschlag selbsttätig in der Führungsschiene herabgleitet, so dass nicht immer ein einwandfreies Einrasten der Sperre in die Ausnehmungen der Führungsschiene gewährleistet ist, sondern erst nach mehrfachem Hin- und Herschieben des Gleitstückes in der Führungsschiene.

Die Erfindung löst die Aufgabe, den Schlitten und die mit ihm verbundenen Teile in der Führungsschiene eines höhenverstellbaren Befestigungs- oder Umlenkbeschlages für Sicherheitsgurte geräuschfrei, also klapperfrei, zu lagern und darüber hinaus die Reibung zwischen dem Schlitten und der Führungsschiene zu erhöhen, um ein Herabgleiten des Schlittens in der Führungsschiene beim Auslösen durch die auf den Schlitten einwirkende Zugkraft des Gurtes des Sicherheitssystems zu vermeiden, und darüber hinaus den Schlitten derart in der Führungsschiene zu halten, dass bei einer Betätigung der Verstelleinrichtung das Gleitstück aufgrund des vom Gurtband ausgeübten Zuges auf den Befestigungs- oder Umlenkbeschlag nicht bis in seine unterste Endstellung herabgleitet, sondern in der nächstliegenden Eingreifdurchbrechung der in der Führungsschiene ausgebildeten Eingreifdurchbrechungen zum Halten gebracht wird.

Zur Lösung dieser Aufgabe wird eine gattungsgemässe, höhenverstellbare Befestigungs- oder Umlenkvorrichtung für Sicherheitsgurte vorgeschlagen, die erfindungsgemäss in der Weise ausgebildet ist, dass die Führungsschiene in ihrer Grundplatte mit einer Anzahl von im gleichen oder ungleichen Abstand angeordneten Eingreifdurchbrechungen mit diesen zugeordneten Einlaufschrägen für den Eingriff eines freien, rechtwinklig abgebogenen Endes eines als Klinke ausgebildeten Sperrgliedes versehen ist, die als zweiarmiger Hebel in dem Schlitten drehbar gelagert ist und deren dem Klinkeneingriffende entgegengesetztes Ende als abgewinkelte Betätigungshandhabe ausgebildet ist, dass der Schlitten in der Bewegungsbahn des Klinkeneingriffendes mit einer Durchbrechung versehen und mit einem auf der Grundplatte der Führungsschiene gleitend geführten, gehäuseartigen Kunststoffteil verbunden ist, das eine mit der Durchbrechung in dem Schlitten deckungsgleiche Durchbrechung und das auf der des Befestigungs- oder Umlenkbeschlages liegenden Seite eine Kammer zur Aufnahme einer den das Klinkeneingriffende tragenden Klinkenhebelarm beaufschlagenden Druckfeder aufweist, dass der Drehbolzen der Klinke in dem Kunststoffteil gelagert ist, dass der Befestigungsbolzen für den Befestigungs- oder Umlenkbeschlag mit dem Schlitten an seinem dem Schlitten zugekehrten Ende eine Kammer für eine aus einer mittels einer Feder beaufschlagten Kugel bestehende Bremseinrichtung aufweist, wobei das Kunststoffteil im Beaufschlagungsbereich der Kugel mit einer Durchbrechung versehen ist, die so bemessen ist, dass die Kugel der Bremseinrichtung mit einem Abschnitt die Durchbrechung in dem Kunststoffteil durchgreifend ist, und dass der Abstand des Klinkeneingriffendes und der federbeaufschlagten Kugel der Bremseinrichtung etwa dem Abstand zweier Eingriffdurchbrechungen von im gleichen Abstand voneinander angeordneten Eingriffdurchbrechungen in der Grundplatte der Führungsschiene entspricht.

Des weiteren sieht die Erfindung eine höhenverstellbare Befestigungs- oder Umlenkvorrichtung für den Sicherheitsgurt eines Sicherheitssystems in Kraftfahrzeugen gemäss der eingangs genannten Art vor, die in der Weise ausgebildet ist, dass die Führungsschiene in ihrer Grundplatte mit einer Anzahl von im gleichen oder ungleichen Abstand voneinander angeordneten Eingreifdurchbrechungen mit diesen zugeordneten Einlaufschrägen für den Eingriff eines freien, rechtwinklig abgebogenen Endes eines als Klinke ausgebildeten Sperrgliedes versehen ist, die als einarmiger Schwenkhebel mit einem in Richtung zur Führungsschiene abgewinkelten Abschnitt ausgebildet ist und die mit ihrem Hebelarm in einem auf dem Schlitten in Führungsschienenlängsrichtung verschieblichen Schieber ausgebildeten Lager mittels eines Gleit- und Führungselementes gehalten ist, der mit einem verschwenkbaren Betätigungshebel in Verbindung steht, dass der Schlitten in der Bewegungsbahn des Klinkeneingriffendes der Klinke mit einer Durchbrechung versehen und mit einem auf der Grundplatte der Führungsschiene gleitend geführten, gehäuseartigen Kunststoffteil verbunden ist, das eine mit der Durchbrechung in dem Schlitten deckungsgleiche Durchbrechung in der Kunststoffteilgrundplatte und auf der des Befestigungs- oder Umlenkbeschlages liegenden Seite eine Kammer zur Aufnahme einer den Hebelarm der Klinke beaufschlagenden Druckfeder aufweist, dass der Betätigungshebel für den Schieber in dem Kunststoffteil verschwenkbar gelagert ist und an seinem dem Schlitten zugewandten Ende einen mit dem Schieber in Eingriff stehenden Schaltnocken aufweist, dass in der Bewegungsbahn des Schiebers ein sich in die Ausgangslage selbsttätig oder zwangsgeführt rückstellendes Eingriffelement, wie Sperrhaken, Sperrhebel, Sperrstift od.dgl. auf dem Schlitten angeordnet ist, das mit einem Eingriffabschnitt in einer Durchbrechung in dem Schlitten und einer mit dieser Durchbrechung korrespondierenden weiteren Durchbrechung in dem Kunststoffteil derart angeordnet ist, dass bei einem Verschieben des Schiebers mittels des Betätigungshebels das Eingriffelement mit seinem freien Ende in einen von mehreren in der Führungsschiene ausgebildeten, in einem Abstand von den Eingreifdurchbrechungen angeordneten Freiraum einführbar und bei Rückführung des Schiebers aus dem Freiraum selbsttätig herausführbar ausgebildet ist.

Mit derart ausgebildeten höhenverstellbaren Befestigungs- oder Umlenkvorrichtungen wird erreicht, dass mittels der Federelemente der Schlitten mit seinem Kunststoffteil gegen die Gleitfläche der Führungsschiene gepresst wird, wodurch die Reibkraft erhöht wird, so dass bei einer Betätigung bzw. bei einem Auslösen der Verstellvorrichtung verhindert wird, dass der Schlitten durch den vom Gurtband auf den Befestigungs- oder Umlenkbeschlag ausgeübten Zug selbsttätig in der Führungsschiene herabgleitet, so dass vermittels der erzielten Bremswirkung ein sicheres Höhenverstellen und Einrasten der Klinke des Sperrgliedes in die Ausnehmungen des Führungsschlittens gewährleistet ist. Die im Befestigungsbolzen für den Befestigungs- oder Umlenkbeschlag an dem Schlitten vorgesehene Bremseinrichtung übernimmt dabei die Hauptbremswirkung, wobei der auf die Klinke einwirkende Federdruck zusätzlich zu einer Reibkrafterhöhung beiträgt und darüber hinaus dadurch gleichzeitig gewährleistet wird, dass das Klinkeneingriffende auch sicher in die Ausnehmungen der Führungsschiene eingreift, wenn ein Verstellvorgang beendet ist.

Hinzu kommt, dass durch die Verbindung des Schlittens mit einem Kunststoffteil der Schlitten geräuschfrei, d.h. klapperfrei, in der Führungsschiene gehalten ist. Dadurch, dass der Schlitten gleitflächenseitig das Kunststoffteil trägt bzw. mit einer Beschichtung aus Kunststoff versehen ist, wird aufgrund der federnd-elastischen Eigenschaften des für das Kunststoffteil oder die Beschichtung verwendeten Kunststoffes bei Einwirken der Bremskraft auf den Schlitten eine zusätzliche Reibkraft erzeugt.

Ausserdem ist vorteilhaft, dass eine derartige Ausgestaltung einer höhenverstellbaren Befestigungs- oder Umlenkvorrichtung kaum störanfällig ist und eine einfache Bauweise aufweist. Durch kleine Abmessungen ist der Einbau der Befestigungs- oder Umlenkvorrichtung auch in kleine B-Säulen von Kraftfahrzeugen möglich.

Ferner ist vorteilhaft, dass mittels des Eingriffelementes der Schlitten durch den vom Gurtband auf den Befestigungs- oder Umlenkbeschlag ausgeübten Zug in der Führungsschiene bis zur nächsten Eingreifdurchbrechung oder in dem in der Führungsschiene ausgebildeten Freiraum gleiten kann, so dass dadurch ein sicheres Höhenverstellen und Einrasten der Klinke des Sperrgliedes in die Eingreifdurchbrechungen der Führungsschiene gewährleistet ist und es nicht mehr erforderlich ist, den Schlitten mehrfach hin- und herzuschieben, um ein Arretieren des Befestigungs- oder Umlenkbeschlages zu erreichen. Ein weiterer Vorteil ist durch die Verbindung des Schlittens mit dem Kunststoffteil gegeben. Hierdurch ist der Schlitten geräuschfrei in der Führungsschiene gehalten. Aufgrund der federndelastischen Eigenschaften des für das Kunststoffteil verwendeten Kunststoffes wird bei Einwirken der Bremskraft auf den Schlitten eine zusätzliche Reibkraft erzeugt.

Weitere vorteilhafte Ausgestaltungen der Erfindung gehen aus den Unteransprüchen hervor.

Im folgenden wird der Gegenstand der Erfindung in den Zeichnungen erläutert. Es zeigt

Fig. 1 teils in Ansicht, teils in einem senkrechten Längsschnitt die Befestigungs- oder Umlenkvorrichtung,

Fig. 2 in einer Ansicht von oben einen Abschnitt der Führungsschiene mit dem Schlitten und der Klinke,

Fig. 3 einen senkrechten Schnitt durch die Führungsschiene mit dem Schlitten und

Fig. 4 teils in Ansicht, teils in einem Schnitt eine weitere Ausführungsform einer Befestigungs- oder Umlenkvorrichtung.

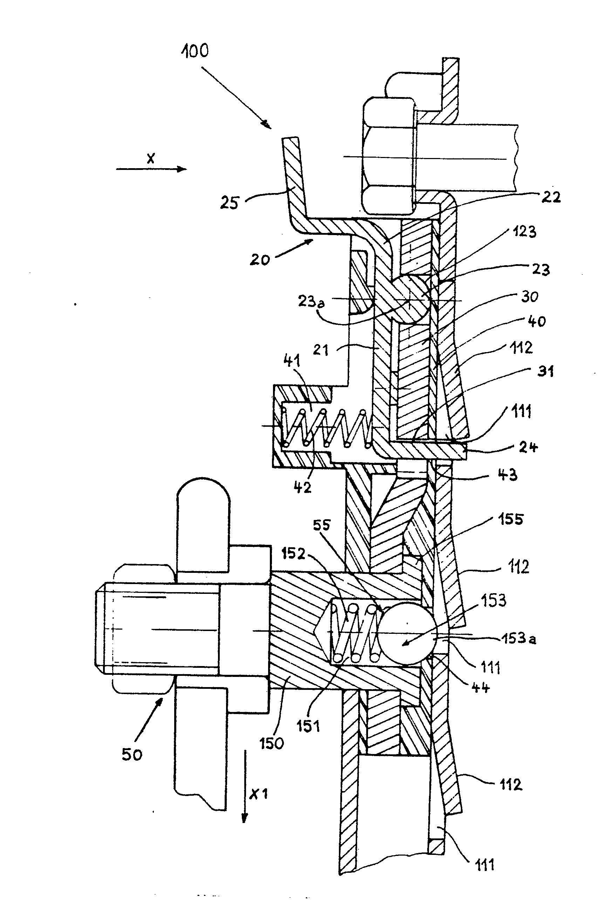

Die in Fig. 1 mit 100 bezeichnete höhenverstellbare Befestigungs- oder Umlenkvorrichtung für den Sicherheitsgurt eines Sicherheitssystems in Kraftfahrzeugen besteht aus einer Führungsschiene 10, in der ein schlittenartig ausgebildetes Gleitstück 30 beweglich angeordnet ist. Die Führungsschiene 10 hat einen im wesentlichen C- oder U-förmigen Querschnitt, so dass sich zwischen den so gebildeten Führungslappen 12, 13 ein längsgerichteter Führungsschlitz 15 oberhalb der Grundplatte 11 der Führungsschiene 10 ergibt. Die Grundplatte 11 der Führungsschiene 10 weist eine Anzahl von in gleichem oder ungleichem Abstand voneinander angeordneten Eingreifdurchbrechungen 111 auf, wobei die einseitig vor jeder Eingreifdurchbrechung 111 liegenden Grundplattenabschnitte als Einlaufschrägen 112 ausgebildet sind. Diese Einlaufschrägen 112 werden bei der Herstellung der Führungsschiene 10 aus dem Führungsschienenmaterial mit ausgebildet.

Diese Eingreifdurchbrechungen 111 in der Führungsschiene 10 dienen für den Eingriff eines freien, rechtwinklig abgebogenen Endes 24 einer in dem Schlitten 30 drehbar gelagerten und gehaltenen Klinke 20, die als zweiarmiger Hebel mit den Hebelarmen 21, 22 ausgebildet ist. Der Hebelarm 21 weist das abgewinkelte Klinkeneingriffende 24 auf, während das dem Klinkeneingriffende 24 entgegengesetzte Ende 25 des Hebelarmes 22 der Klinke 20 L-förmig, wie in Fig. 1 dargestellt, derart abgewinkelt ist, dass eine ausserhalb liegende Betätigungshandhabe erhalten wird, die eine tastenartige Funktion hat und die bei Betätigung das Verstellen des Befestigungs- oder Umlenkbeschlages 50 ermöglicht, der mit dem Schlitten 30 verbunden ist und auf den nachstehend noch näher eingegangen wird.

Der Drehbolzen der Klinke 20 ist in Fig. 1 bei 23 angedeutet. Dieser Drehbolzen 23 ist in einer in dem Schlitten 30 ausgebildeten Ausnehmung 123 derart gehalten, dass die Klinke 20 bei einer Druckbeaufschlagung in Pfeilrichtung X um die bei 23a angedeutete Drehachse verschwenken kann.

In der Bewegungsbahn des Klinkeneingriffendes 24 weist der Schlitten 30 eine Durchbrechung 31 auf, durch die das Klinkeneingriffende 24 hindurchgreift, um in die Eingreifdurchbrechung 111 der Führungsschiene 10 eingreifen zu können.

Der Schlitten 30 trägt gleitflächenseitig ein Kunststoffteil 40, welches gehäuseartig ausgebildet und mit dem Schlitten 30 fest verbunden ist. Dieses Kunststoffteil 40 besteht aus geeigneten verschleissfesten Kunststoffen. Auf der Seite, auf der der Befestigungs- oder Umlenkbeschlag 50 der Befestigungs- oder Umlenkvorrichtung 100 liegt, weist das Kunststoffteil 40 eine Kammer 41 auf, in der eine Druckfeder 42 derart angeordnet ist, dass diese Druckfeder den das Klinkeneingriffende 24 tragenden Hebelarm 21 der Klinke 20 beaufschlagt (Fig. 1). Durch die Einwirkung der Feder 42 wird auf das Klinkeneingriffende 24 ein Druck ausgeübt, wodurch sichergestellt ist, dass das Klinkeneingriffende 24 in die jeweilige Eingreifdurchbrechung 111 eingreift, und auch in dieser Eingreifdurchbrechung 111 verbleibt, bis auf das andere freie Ende 25 der Klinke 20 ein Druck ausgeübt wird, so dass durch Verschwenken der Klinke 20 um den Drehpunkt 23a das Klinkeneingriffende 24 aus der Eingreifdurchbrechung 111 herausgezogen wird, so dass der Schlitten 30 mit dem Kunststoffteil 40 in der Führungsschiene 10 verschiebbar ist, um im Hinblick auf die jeweils gewünschte Höheneinstellung die Klinke 20 dann in einer anderen Eingreifdurchbrechung 111 in der Führungsschiene eingreifen zu lassen.

Das Kunststoffteil 40 weist eine mit der Durchbrechung 31 in dem Schlitten 30 deckungsgleiche Durchbrechung 43 auf, damit das Klinkeneingriffende 24 der Klinke 20 einwandfrei zum Einrasten in die Eingreifdurchbrechung 111 hindurchführbar ist.

Des weiteren ist eine Bremseinrichtung 55 vorgesehen, die in dem Befestigungsbolzen 150 für den Befestigungs- oder Umlenkbeschlag 50 an dem Schlitten 30 vorgesehen ist. Dieser Befestigungs- oder Umlenkbeschlag 50, der in Fig. 1 nur angedeutet ist, umfasst eine Öse mit einem Schlitz, durch den das Gurtband des Sicherheitsgurtes hindurchgeführt wird. Aufgrund der verwendeten Aufrollmechanik für den Sicherheitsgurt übt das Gurtband auf den Befestigungs- oder Umlenkbeschlag 50 einen Zug in Pfeilrichtung X1 aus, der auch auf den Schlitten 30 übertragen wird, da der Schlitten 30 mit dem Befestigungs- oder Umlenkbeschlag 50 verbunden ist, mit der Folge, dass, wenn ein Verstellvorgang vorgenommen werden soll und die Klinke 20 gelöst ist, dann durch den vom Gurtband ausgeübten Zug der Schlitten 30 das Bestreben hat, selbsttätig in der Führungsschiene 10 herabzugleiten, was dazu führt, dass der Schlitten 30 von aussen mehrfach in der Führungsschiene 10 verschoben werden muss, um die richtige Eingreifposition für die Klinke in eine der Eingreifdurchbrechungen 111 in der Führungsschiene 10 zu finden und zu erhalten.

Dieses Herabgleiten des Schlittens 30 durch Zug des Gurtbandes wird durch die Bremseinrichtung 55 vermieden, die aus einer mittels einer Druckfeder 152 beaufschlagten Kugel 153 besteht. Die Druckfeder 152 und die Kugel 153 sind in einer am Ende des Befestigungsbolzens 150 ausgebildeten Kammer 51 angeordnet.

Die Anordnung der Kugel 153 der Bremseinrichtung 55 in der Kammer 151 ist derart, dass die Kugel 153 mit einem Abschnitt 153a in eine in dem Kunststoffteil 40 ausgebildete Durchbrechung 44 eingreift und dabei die Grundplatte 11 der Führungsschiene 10 beaufschlagt. Aufgrund des von der Feder 152 auf die Kugel 153 ausgeübten Druckes wird die Kugel 153 gegen die Grundplatte 11 der Führungsschiene 10 gepresst, was zu einer erhöhten Reibung führt, mit der Folge, dass eine Bremswirkung erhalten wird, aufgrund der ein selbsttätiges Herabgleiten des Schlittens 30 in der Führungsschiene 10 aufgrund der Einwirkung des Zuges durch das Gurtband vermieden wird. Vorteilhafterweise greift die Kugel 153 der Bremseinrichtung 55 so weit durch die Durchbrechung 44 des Kunststoffteils 40 hindurch, dass die Kugel 153 auch noch mit einem Abschnitt in der Eingreifdurchbrechung 111 in der Grundplatte 11 der Führungsschiene 10 zum Eingriff kommt und hierdurch eine zusätzliche Sicherung des auf die jeweils gewünschte Höhe eingestellten Befestigungs- oder Umlenkbeschlages 50 erfolgt. Voraussetzung hierfür ist, dass der Abstand des Klinkeneingriffendes 24 der Klinke 20 und der Kugel 153 der Bremseinrichtung 55 dem Abstand zweier Eingreifdurchbrechungen 111 in der Führungsschiene 10 entspricht.

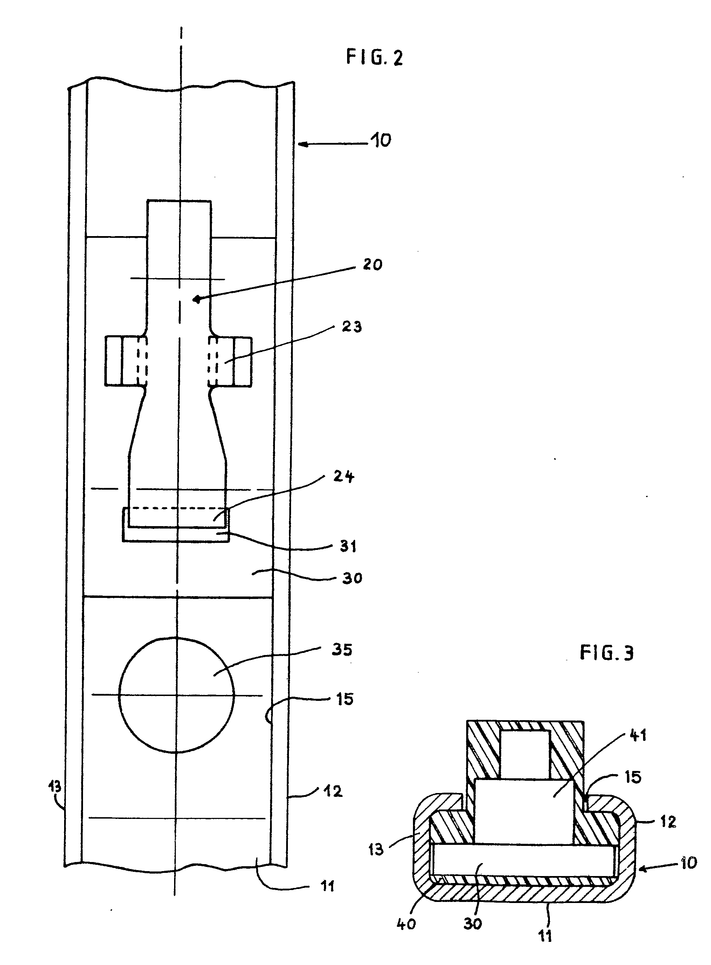

Die Befestigung des Bolzens 150 an dem Schlitten 30 erfolgt unter Verwendung einer Durchbohrung 35 in dem Schlitten 30 (Fig. 2). Das freie Ende des Bolzens 150 ist durch diese Durchbohrung 35 hindurchgeführt und weist einen seitlich abgewinkelten umlaufenden Randabschnitt 155 auf, der den die Durchbohrung 35 begrenzenden Randabschnitt hintergreift (Figur 1).

Die Befestigung der Führungsschiene 10 an einem in der Zeichnung nicht dargestellten Fahrzeugteil, wie z.B. an einer B-Säule eines Kraftfahrzeuges, erfolgt in an sich bekannter Weise.

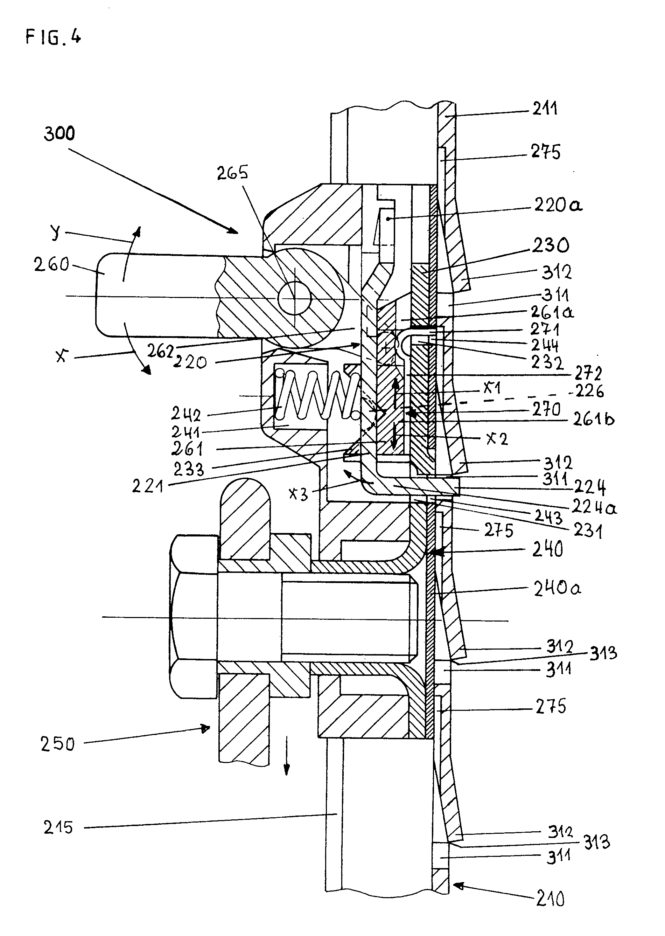

Die in Fig. 4 mit 300 bezeichnete höhenverstellbare Befestigungs- oder Umlenkvorrichtung für den Sicherheitsgurt eines Sicherheitssystems in Kraftfahrzeugen besteht aus einer Führungsschiene 210, in der ein schlittenartig ausgebildetes Gleitstück 230 beweglich angeordnet ist. Die Führungsschiene 210 hat einen im wesentlichen C- oder U-förmigen Querschnitt, so dass sich zwischen den so gebildeten, in der Zeichnung nicht dargestellten Führungslappen ein längsgerichteter Führungsschlitz oberhalb der Grundplatte 211 der Führungsschiene 210 ergibt. Die Grundplatte 211 der Führungsschiene 210 weist eine Anzahl von in gleichem oder ungleichem Abstand voneinander angeordneten Eingreifdurchbrechungen 311 auf, wobei die einseitig vor jeder Eingreifdurchbrechung 311 liegenden Grundplattenabschnitte als Einlaufschrägen 312 ausgebildet sind. Diese Einlaufschrägen 312 werden bei der Herstellung der Führungsschiene 210 aus dem Führungsschienenmaterial mit ausgebildet.

Diese Eingreifdurchbrechungen 311 in der Führungsschiene 210 dienen für den Eingriff eines freien rechtwinklig abgebogenen Endes 224 einer an dem Schlitten 230 drehbar gelagerten und gehaltenen Klinke 220, die als einarmiger Hebel ausgebildet ist, der bei 220a drehbar angeordnet ist, während sein Hebelarm 221 das abgewinkelte Klinkeneingriffende 224 aufweist. Der Abschnitt 224a des Hebelarmes 221 ist in Richtung zur Führungsschiene 210 abgewinkelt. Für das Anheben des Klinkeneingriffendes 224 aus einer der Eingreifdurchbrechungen 311 ist ein in Führungsschienenlängsrichtung verschieblicher Schieber 261 vorgesehen, der mit einem verschwenkbaren Betätigungshebel 260 in Wirkverbindung steht. Zur Steuerung des Verschwenkens des freien Endes der Klinke 220 mittels des Schiebers 261 weist dieser eine keilförmige Ausnehmung 233 auf, in der ein an dem Hebelarm 221 der Klinke 220 angeformtes Führungs- und Gleitelement 226 gelagert ist. Der Schlitten 230 weist im Bewegungsbereich des Klinkeneingriffendes 224 eine Durchbrechung 231 auf. Ferner ist der Schlitten 230 mit einem auf der Grundplatte 211 der Führungsschiene 210 gleitend geführten, gehäuseartigen Kunststoffteil 40 verbunden, das eine mit der Durchbrechung 231 in dem Schlitten 230 deckungsgleiche Durchbrechung 243 in seiner Grundplatte 240a aufweist, so dass das Klinkeneingriffende 224 der Klinke 220 durch die Durchbrechungen 231, 243 in die Eingreifdurchbrechung 311 einführbar ist.

Das gehäuseartig ausgebildete und mit dem Schlitten 230 fest verbundene Kunststoffteil 240 besteht aus geeigneten, verschleissfesten Kunststoffen. Auf der Seite, auf der der mit 250 bezeichnete Befestigungs- oder Umlenkbeschlag der Befestigungs- oder Umlenkvorrichtung 300 liegt, weist das Kunststoffteil 240 eine Kammer 241 auf, in der eine Druckfeder 242 derart angeordnet ist, dass diese Druckfeder die Klinke 220, d.h. deren Hebelarm 221, beaufschlagt. Durch die Einwirkung der Feder 242 auf die Klinke 220 wird auf das Klinkeneingriffende 224 ein Druck ausgeübt, wodurch sichergestellt ist, dass das Klinkeneingriffende 224 in die jeweilige Eingreifdurchbrechung 311 eingreift und auch in dieser Eingreifdurchbrechung verbleibt, bis durch das Verschieben des Schiebers 261 mittels des Betätigungshebels 260 die Klinke 220 derart verschwenkt wird, dass das Klinkeneingriffende 224 aus der Eingreifdurchbrechung 311 herausgezogen wird, so dass der Schlitten 230 mit dem Kunststoffteil 240 und dem Befestigungs- oder Umlenkbeschlag 250 in der Führungsschiene 210 verschiebbar ist, um im Hinblick auf die jeweils gewünschte Höheneinstellung die Klinke 220 dann in eine andere Eingreifdurchbrechung 111 in der Führungsschiene eingreifen zu lassen. Darüber hinaus bewirkt die Druckfeder 242 die Lagerung und Halterung der Klinke 220 in der keilförmigen Ausnehmung 223 in dem Schieber 261, so dass bei einem Verschieben des Schiebers 261 die Klinke 220 mit ihrem Führungs- und Gleitelement 226 in dieser keilförmigen Ausnehmung 233 in dem Schieber 261 gehalten ist und nicht ausrasten kann.

Der Betätigungshebel 260 ist in dem Kunststoffteil 240 bei 265 verschwenkbar gelagert. An seinem dem Schlitten 230 zugewandten Ende weist der Betätigungshebel 260 einen Schaltnokken 262 auf, der mit dem Schieber 261 in Eingriff steht, und zwar derart, dass bei einem Verschwenken des Betätigungshebels 260 in Pfeilrichtung X oder Pfeilrichtung Y der Schieber 261 in Richtung der Pfeile X1 oder X2 verschoben wird.

In der Bewegungsbahn des Schiebers 261 ist ein sich in die Ausgangslage selbsttätig oder zwangsgeführt rückstellendes Eingriffelement 270 auf dem Schlitten 230 angeordnet und mit diesem fest verbunden. Dieses Eingriffelement 270 kann als Sperrhaken, Sperrhebel, Sperrstift od.dgl. ausgebildet sein, jedoch auch andersartig ausgebildete Eingriffelemente können zur Anwendung gelangen. Wesentliche Aufgabe dieses Eingriffelementes 270 ist es, gesteuert durch den Schieber 261, eine Eingriffposition in in der Führungsschiene 210 gesondert ausgebildeten Freiräumen 275 einzunehmen und auch aus dieser Eingriffsposition herausgeschwenkt zu werden, wobei auch das Herausschwenken aus dieser Eingriffsposition zwangsgesteuert oder selbsttätig erfolgen kann. Diese selbsttätige Steuerung in die Ausgangslage kann mittels Federelementen oder einer federnd-elastischen Ausgestaltung des Eingriffelements erfolgen. Bei dem in der Zeichnung dargestellten Ausführungsbeispiel ist dieses Eingriffelement 270 als Sperrhaken ausgebildet. Dieser Sperrhaken weist einen auf dem Schlitten 230 liegenden Abschnitt 272 auf, der in einen abgewinkelten Endabschnitt 271 übergeht. Der Übergangsbereich zwischen den beiden Abschnitten 271, 272 ist kreisbogenförmig in Richtung zu dem Betätigungshebel 260 ausgebildet, so dass dieser kreisbogenförmig und erhaben ausgebildete Sperrhakenabschnitt in der Bewegungsbahn des Schiebers 261 zu liegen kommt. Sowohl der Schlitten 230 als auch das Kunststoffteil 240 weisen miteinander korrespondierende Durchbrechungen auf, in die der abgewinkelte Abschnitt 272 eingreifen kann. Die Durchbrechung in dem Schlitten 230 ist mit 232 und die Durchbrechung in der Grundplatte 240a des Kunststoffteils 240 mit 244 bezeichnet. In der Führungsschiene 210 sind für den Eingriff des Eingriffelementes 270 eine Anzahl von Freiräumen 275 angeordnet, die in gleichem Abstand voneinander vorgesehen sind.

Wie die Zeichnung zeigt, weist der Schieber 261 in seinem vorderen und oberen Bereich eine Führungsausnehmung 261a auf, die so bemessen und ausgebildet ist, dass wenn der Schieber 261 die in der Zeichnung dargestellte Position einnimmt, dann das Eingriffelement 270 nicht beaufschlagt ist und nicht in einen der Freiräume 275 eingreift, d.h. keine sperrende Stellung einnimmt. Diese Ausnehmung 261a des Schiebers 261 geht dann rückwärtig bzw. bodenseitig in den Abschnitt 261b über, der gleichzeitig die Gleitfläche auf dem Schlitten 230 bzw. dem Eingriffelement 270 darstellt, dessen Abschnitt 272 plattenförmig ausgebildet ist, damit eine gute Gleitfläche für den Schieber 261 erhalten wird. Die Ausnehmung 261a im vorderen Teil des Schiebers 261 geht unter Ausbildung einer abgeschrägten Stufe in den Gleitflächenabschnitt 261b des Schiebers 261 über, so dass bei einem Verschieben des Schiebers 261 in Pfeilrichtung X1 dann aufgrund der Vorbewegung des Schiebers die Gleitfläche des Schiebers das Eingriffelement 270 derart beaufschlagt, dass sein freies Endes 271 in den vorgesehenen Freiraum 275 eingreift, während bei einem Verschieben des Schiebers 261 in Pfeilrichtung X2 dann das Eingriffelement 270 aus seiner Eingriffposition freigegeben wird, derart, dass aufgrund der federnd-elastischen Ausgestaltung des Eingriffelementes 270 dessen Eingriffende 271 aus dem Freiraum 275 selbsttätig zurückgezogen wird, was aufgrund der federnd-elastischen Ausgestaltung des Eingriffelementes 270 bewirkt wird.

Der Abstand des Klinkeneingriffendes 224 der Klinke 220 zum Eingriffende 271 des Eingriffelementes 270 ist derart bemessen, dass wenn das Klinkeneingriffende 224 in eine der in der Führungsschiene 210 vorgesehenen Eingreifdurchbrechungen 311 einrastet, dann das Eingriffende 271 des Eingriffelementes 270 keine Position in einem der Freiräume 275 einnimmt, sondern die in der Zeichnung dargestellte Position einnimmt.

Das Ausrasten des Klinkeneingriffendes 224 der Klinke 220 aus einer der Eingreifdurchbrechungen 311 erfolgt durch Verschwenken des Betätigungshebels 260 in Pfeilrichtung Y und durch gleichzeitiges Verschieben des Schiebers 261 in Pfeilrichtung X2. Wird der Schieber 261 in Pfeilrichtung X2 verschoben, dann gleitet das Führungs- und Gleitelement 226 an der das Führungs- und Gleitelement 226 beaufschlagenden Wandfläche der keilförmigen Ausnehmung 233 in dem Schieber 261 entlang, wobei gleichzeitig das freie Ende des Hebelarmes 221 der Klinke 220 in Pfeilrichtung X3 anhebt mit der Folge, dass das Klinkeneingriffende 224 aus der Eingreifdurchbrechung 311 herausgehoben wird. In dieser Position kann dann der Schlitten 230 mit dem Befestigungs- oder Umlenkbeschlag 250 entweder nach oben oder nach unten verschoben werden, bis das Klinkeneingriffende 224 der Klinke 220 in eine andere, d.h. gewünschte, Eingreifdurchbrechung 311 eingreift, was nach Überführung des Betätigungshebels 260 in seine in der Zeichnung dargestellte Ausgangsstellung durch die Druckfeder 242 bewirkt wird.

Wird dagegen der Betätigungshebel 260 in Pfeilrichtung X verschwenkt, dann nimmt der Schaltnocken 262 des Betätigungshebels 260 den Schieber 261 mit und bewegt diesen in Pfeilrichtung X1 nach oben mit der Folge, dass bei einem Verschieben des Schlittens 230 in der Führungsschiene 210 das Eingriffende 271 des Eingriffelementes 270 in einen der vorgesehenen Freiräume 275 einrastet, so dass auch bei Einwirkung des vom Gurtband ausgeübten Zuges auf den Befestigungs- oder Umlenkbeschlag sich der Schlitten 230 nicht selbsttätig in eine tiefer gelegene Position verschieben kann, wenn die Klinke 220 gerade ausgerastet ist. Erst wenn der Betätigungshebel 260 in seine Ausgangsposition verschwenkt worden ist und dabei dann der Schieber 261 die in der Zeichnung dargestellte Position einnimmt, rastet das Eingriffende 272 des Eingriffelementes 270 aus dem Freiraum aus, während dann gleichzeitig das Klinkeneingriffende 224 der Klinke 220 in die entsprechende Eingreifdurchbrechung 311 eingreift bzw. in diese Eingreifdurchbrechung eingerastet ist.

Das Klinkeneingriffende 224 der Klinke 220 hebt jedoch bei einer Betätigung des Betätigungshebels 260 nicht voll an, sondern nur so weit, bis das Klinkeneingriffende 224 unterhalb der von der Kante 313 der Eingreifdurchbrechung 111 gebildeten, senkrechten Ebene zu liegen kommt. Bei einem Verschieben des Schlittens 230 läuft dann das Klinkeneingriffende 224 an der inneren Führungsfläche der Einlaufschräge 312 entlang und rastet dann in die nächst höher gelegene Eingreifdurchbrechung 311 ein, so dass bei der Betätigung der Klinke 220 jedes Einrastfach erreichbar ist.

Die Betätigung des Schiebers 241 durch den Schaltnocken 262 des Betätigungshebels 260 erfolgt unter Zuhilfenahme einer besonderen Ausgestaltung des Schaltnockens 262 in der Weise, dass der Schaltnocken 262 endseitig zwei seitlich abgewinkelte Abschnitte aufweist, die in seitlichen Aussparungen des Schiebers 261 eingreifen, so dass in keiner Weise die Bewegung der Klinke 220 beeinträchtigt wird.

### Patentansprüche

1. Höhenverstellbare Befestigungs- oder Umlenkvorrichtung für den Sicherheitsgurt eines Sicherheitssystems in Kraftfahrzeugen, bestehend aus einer an einem Fahrzeugbauteil, wie B-Säule, angebrachten Führungsschiene (10) mit einem Führungsschlitz (15) mit Ausnehmungen, in die ein Sperrglied eines den Befestigungs- oder Umlenkbeschlag, der eine Öse mit einem Schlitz zum Hindurchführen des Gurtbandes aufweist, tragenden schlittenartigen Gleitstückes oder Schlittens (30) eingreift, wobei der Schlitten (30) gleitflächenseitig mit Kunststoffteilen versehen ist oder Beschichtungen aus Kunststoffen aufweist und wobei der Schlitten (30) mittels einer Bremseinrichtung (55) gegen ein selbsttätiges Herabgleiten in der Führungsschiene (10) in dieser sicherbar ist, dadurch gekennzeichnet, dass die Führungsschiene (10) in ihrer Grundplatte (11) mit einer Anzahl von im gleichen oder ungleichen Abstand voneinander angeordneten Eingreifdurchbrechungen (111) mit diesen zugeordneten Einlaufschrägen (112) für den Eingriff eines freien, rechtwinklig abgebogenen Endes (24) eines als Klinke (20) ausgebildeten Sperrgliedes versehen ist, die als zweiarmiger Hebel (21, 22) in dem Schlitten (30) drehbar gelagert ist und deren dem Klinkeneingriffende (24) entgegengesetztes Ende (25) als abgewinkelte Betätigungshandhabe ausgebildet ist, dass der Schlitten (30) in der Bewegungsbahn des Klinkeneingriffendes (24) mit einer Durchbrechung (31) versehen und mit einem auf der Grundplatte (11) der Führungsschiene (10) gleitend geführten, gehäuseartigen Kunststoffteil (40) verbunden ist, das eine mit der Durchbrechung (31) in dem Schlitten (30) deckungsgleiche Durchbrechung (43) und das auf der des Befestigungs- oder Umlenkbeschlages (50) liegenden Seite eine Kammer (41) zur Aufnahme einer den das Klinkeneingriffende (24) tragenden Klinkenhebelarm (21) beaufschlagenden Druckfeder (42) aufweist, dass der Drehbolzen (23) der Klinke (20) in dem Kunststoffteil (40) gelagert ist, dass der Befestigungsbolzen (150) für den Befestigungs- oder Umlenkbeschlag (50) mit dem Schlitten (30) an seinem dem Schlitten (30) zugekehrten Ende eine Kammer (151) für eine aus einer mittels einer Feder (152) beaufschlagten Kugel (153) bestehende Bremseinrichtung (55) aufweist, wobei das Kunststoffteil (40) im Beaufschlagungsbereich der Kugel (153) mit einer Durchbrechung (44) versehen ist, die so bemessen ist, dass die Kugel (153) der Bremseinrichtung (55) mit einem Abschnitt (153a) die Durchbrechung (44) in dem Kunststoffteil (40) durchgreifend ist, und dass der Abstand des Klinkeneingriffendes (24) und der federbeaufschlagten Kugel (153) der Bremseinrichtung (55) etwa dem Abstand zweier Eingriffdurchbrechungen (111) von im gleichen Abstand voneinander angeordneten Eingriffdurchbrechungen in der Grundplatte (11) der Führungsschiene (10) entspricht.

2. Höhenverstellbare Befestigungs- oder Umlenkvorrichtung für den Sicherheitsgurt eines Sicherheitssystems in Kraftfahrzeugen, bestehend aus einer an einem Fahrzeugbauteil, wie B-Säule, angebrachten Führungsschiene (210) mit einem Führungsschlitz mit Ausnehmungen, in der ein Sperrglied eines den Befestigungs- oder Umlenkbeschlag, der eine Öse mit einem Schlitz zum Hindurchführen des Gurtbandes aufweist, tragenden schlittenartigen Gleitstückes oder Schlittens (230) eingreift, wobei der Schlitten (230) gleitflächenseitig mit Kunststoffteilen versehen ist oder Beschichtungen aus Kunststoffen aufweist und wobei der Schlitten mittels einer Bremseinrichtung gegen ein selbsttätiges Herabgleiten in der Führungsschiene (210) in dieser sicherbar ist, dadurch gekennzeichnet, dass die Führungsschiene (210) in ihrer Grundplatte (211) mit einer Anzahl von im gleichen oder ungleichen Abstand voneinander angeordneten Eingreifdurchbrechungen (311) mit diesen zugeordneten Einlaufschrägen (312) für den Eingriff eines freien, rechtwinklig abgebogenen Endes (224) eines als Klinke (220) ausgebildeten Sperrgliedes versehen ist, die als einarmiger Schwenkhebel mit einem in Richtung zur Führungsschiene (210) abgewinkelten Abschnitt (224a) ausgebildet ist und die mit ihrem Hebelarm (221) in einem auf dem Schlitten (230) in Führungsschienenlängsrichtung verschieblichen Schieber (261) ausgebildeten Lager (233) mittels eines Gleit- und Führungselementes (226) gehalten ist, der mit einem verschwenkbaren Betätigungshebel (260) in Verbindung steht, dass der Schlitten (230) in der Bewegungsbahn des Klinkeneingriffendes (224) der Klinke (220) mit einer Durchbrechung (231) versehen und mit einem auf der Grundplatte (211) der Führungsschiene (210) gleitend geführten, gehäuseartigen Kunststoffteil (240) verbunden ist, das eine mit der Durchbrechung (231) in dem Schlitten (230) deckungsgleiche Durchbrechung (243) in der Kunststoffteilgrundplatte (240a) und auf der des Befestigungs- oder Umlenkbeschlages (250) liegenden Seite eine Kammer (241) zur Aufnahme einer den Hebelarm (221) der Klinke (220) beaufschlagenden Druckfeder (242) aufweist, dass der Betätigungshebel (260) für den Schieber (261) in dem Kunststoffteil (240) verschwenkbar gelagert ist und an seinem dem Schlitten (230) zugewandten Ende einen mit dem Schieber (261) in Eingriff stehenden Schaltnocken (262) aufweist, dass in der Bewegungsbahn des Schiebers (261) ein sich in die Ausgangslage selbsttätig oder zwangsgeführt rückstellendes Eingriffelement (270), wie Sperrhaken, Sperrhebel, Sperrfrist od.dgl. auf dem Schlitten (230) angeordnet ist, das mit einem Eingriffabschnitt (271) in einer Durchbrechung (232) in dem Schlitten (230) und einer mit dieser Durchbrechung (232) korrespondierenden weiteren Durchbrechung (244) in dem Kunststoffteil (240) derart angeordnet ist, dass bei einem Verschieben des Schiebers (261) mittels des Betätigungshebels (260) das Eingriffelement (270) mit seinem freien Ende in einen von mehreren in der Führungsschiene (210) ausgebildeten, in einem Abstand von den Eingreifdurchbrechungen (311) angeordneten Freiraum (275) einführbar und bei Rückführung des Schiebers (261) aus dem Freiraum (275) selbsttätig herausführbar ausgebildet ist.

3. Befestigungs- oder Umlenkvorrichtung nach Anspruch 2, dadurch gekennzeichnet, dass das Eingriffelement (270) als Sperrhaken mit einem auf dem Schieber (261) liegenden Abschnitt (272) und einem an diesen rechtwinklig abgebogenen Eingriffabschnitt (271) ausgebildet ist, dessen freies Ende in der Durchbrechung (232) in dem Schlitten und der mit dieser Durchbrechung (232) korrespondierenden Durchbrechung (244) in dem Kunststoffteil (240) liegend ist, wobei der Übergangsbereich zwischen den beiden Abschnitten (271, 272) durch eine halbkreisförmige Abbiegung in Richtung zur Klinke (220) federnd-elastisch ausgebildet und in der Bewegungs- bzw. Vorschubbahn des Schiebers (261) angeordnet ist.

4. Befestigungs- oder Umlenkvorrichtung nach Anspruch 2 und 3, dadurch gekennzeichnet, dass die Klinke (220) mit ihrem Hebelarm (221) an dem Schieber (261) gehalten ist, der mit einer keilförmigen Ausnehmung (233) versehen ist, in der die Klinke (220) mittels eines bei Bewegung des Schiebers (261) an den die keilförmige Ausnehmung (233) begrenzenden Wandflächen gleitenden Führungs- und Gleitelementes (226) gehalten ist.

**Revendications**

1. Dispositif d'ancrage ou de renvoi réglable en hauteur pour ceinture de sécurité de véhicule, comportant un rail-guide (10) fixé à un élément du véhicule, comme la colonne B, avec une fente de guidage (15) avec des creux, rail-guide dans lequel s'engrène l'organe d'arrêt d'une pièce coulissante du type coulisseau ou coulisseau (30) qui porte l'armature d'ancrage ou de renvoi qui présente un œillet avec une fente pour faire passer la ceinture, le coulisseau (30) étant pourvu sur le côté de la surface de glissement de pièces en matière plastique ou présentant des enductions en matière plastique et le coulisseau (30) pouvant être bloqué dans le rail-guide (10) au moyen d'un dispositif de freinage (55) agissant contre un glissement automatique vers le bas dans le rail-guide (10), caractérisé en ce que le rail-guide (10) est pourvu sur sa plaque de base (11) d'un certain nombre de découpures d'engrènement (111) placées à une distance égale ou inégale les unes des autres avec des biseaux d'entrée correspondants (112) pour l'engrènement d'une extrémité (24) libre, courbée à angles droits d'un organe d'arrêt formé comme une clenche (20 qui est positionnée comme un levier intermobile (21, 22) de manière à être rotative dans le coulisseau (30) et dont l'extrémité (25) opposée à l'extrémité d'engrènement (24) de la clenche est formée comme poignée d'actionnement coudée, que le coulisseau (30) est pourvu d'une découpure (31) dans la voie parcourue par l'extrémité d'engrènement de la clenche (24) et qu'il est relié à une pièce en matière plastique (40) du type boîtier, guidée de manière coulissante sur la plaque de base (11) du rail-guide (10), pièce qui présente une découpure (43) qui coïncide avec la découpure (31) du coulisseau (30) et qui présente une chambre (41), sur le côté se trouvant vers l'armature d'ancrage ou de renvoi (50) pour le logement d'un ressort de pression (42) qui agit sur le bras de levier de la clenche (21) qui porte l'extrémité d'engrènement de la clenche (24), que le pivot (23) de la clenche (20) est positionné dans la pièce en matière plastique (40), que le boulon de serrage (150) de l'armature d'ancrage ou de renvoi (50) avec le coulisseau (30) à son extrémité tournée vers le coulisseau (30) présente une chambre (151) pour un dispositif de freinage (55) se composant d'une boule (153) poussée par un ressort (152), la pièce en matière plastique (40) étant pourvue, dans la zone de pression de la boule (153), d'une découpure (44) qui est dimensionnée de telle manière que la boule (153) du dispositif de freinage (55) traverse la découpure (44) de la pièce en matière plastique (40) par une partie (153a) et que l'écart entre l'extrémité d'engrènement de la clenche (24) et la boule (153) qui pousse le ressort du dispositif de freinage (55) correspond approximativement à l'écart entre deux découpures d'engrènement (111) parmi les découpures d'engrènement ménagées à distance égale les unes des autres dans la plaque de base (11) du rail-guide (10).

2. Dispositif d'ancrage ou de renvoi réglable en hauteur pour ceinture de sécurité de véhicule, comportant un rail-guide (210) fixé à un élément de véhicule, comme la colonne B, avec une fente de guidage avec des creux, rail-guide dans lequel s'engrène l'organe d'arrêt d'une pièce coulissante du type coulisseau ou coulisseau (230) qui porte l'armature d'ancrage ou de renvoi qui présente un œillet avec une fente pour faire passer la ceinture, le coulisseau (230) étant pourvu sur le côté de la surface de glissement de pièces en matière plastique ou présentant des enductions en matière plastique et le coulisseau pouvant être bloqué dans le rail-guide (210) au moyen d'un dispositif de freinage agissant contre un glissement automatique vers le bas dans le rail-guide (210), caractérisé en ce que le rail-guide (210) est pourvu sur sa plaque de base (211) d'un certain nombre de découpures d'engrènement (311) placées à une distance égale ou inégale les unes des autres avec des biseaux d'entrée correspondants (312) pour l'engrènement d'une extrémité (224) libre courbée à angles droits d'un organe d'arrêt formé comme une clenche (220) qui est formée comme un levier pivotant à bras unique avec une partie (224a) coudée en direction du rail-guide (210) et qui est maintenue par son bras de levier (221) dans un palier (233) formé comme une coulisse (261) translatable sur le coulisseau (230) dans le sens longitudinal du rail-guide au moyen d'un élément de guidage ou de glissement (226) qui est en relation avec un levier d'actionnement pivotant (260), que le coulisseau (230) est pourvu d'une découpure (231) dans la voie parcourue par l'extrémité d'engrènement (224) de la clenche (220) et qu'il est relié à une pièce en matière plastique (240) du type boîtier guidée de manière coulissante sur la plaque de base (211) du rail-guide (210), pièce qui présente une découpure (243) qui coïncide avec la découpure (231) du coulisseau (230) dans la plaque de base de la pièce en matière plastique (240a) et qui présente une chambre (241) sur le côté se trouvant vers l'armature d'ancrage ou de renvoi (250) pour le logement d'un ressort de pression (242) qui agit sur le bras de levier (221) de la clenche (220), que le levier d'actionnement (260) de la coulisse (261) est positionné de manière à être rotatif dans la pièce en matière plastique (240) et qu'il présente, à son extrémité tournée vers le coulisseau (230), une came de contacteur (262) qui peut s'engrener avec la coulisse (261), qu'un élément d'engrènement (270) qui revient automatiquement ou qui est guidé de manière à revenir obligatoirement à sa position de départ, tel qu'un arrêt, levier d'arrêt ou équivalent, est placé sur le coulisseau (230), élément qui est placé avec une partie d'engrènement (271) dans une découpure (232) du coulisseau (230) et une autre découpure (244) dans la pièce en matière plastique (240) correspondant à cette découpure (232) de telle manière que l'élément d'engrènement (270) peut être introduit par son extrémité libre dans un espace libre (275) parmi plusieurs autres, formé dans le rail-guide (210) et ménagé à une certaine distance des découpures d'engrènement (311), lors d'un déplacement de la coulisse (261) au moyen du levier d'actionnement, et qu'il est formé de manière à pouvoir ressortir automatiquement de l'espace libre (275) lors de la rétroaction de la coulisse (261).

3. Dispositif d'ancrage ou de renvoi selon la revendication 2, caractérisé en ce que l'élément d'engrènement (270) est formé comme un arrêt avec une partie (272) reposant sur la coulisse (261) et une partie d'engrènement (271) recourbée à angles droits contre celle-ci, dont l'extrémité libre repose dans la découpure (232) du coulisseau et dans la découpure (244) de la pièce en matière plastique (240) qui correspond à cette découpure (232), la zone de transition entre les deux parties (271, 272) étant formée de manière à être élastique à la manière d'un ressort par une courbure demi-circulaire en direction de la clenche et étant placée dans la voie parcourue par la coulisse (261) ou sa voie d'avancement.

4. Dispositif d'ancrage ou de renvoi selon les revendications 2 et 3, caractérisé en ce que la clenche (220) est maintenue par son bras de levier (221) sur la coulisse (261) qui est pourvue d'un creux cunéiforme (233), dans lequel la clenche (220) est maintenue au moyen d'un élément de guidage et de glissement (226) coulissant, lors du déplacement de la coulisse (261) sur les surfaces des parois délimitant le creux cunéiforme (233).

**Claims**

1. Anchoring or deflection device for a vehicle safety belt adjustable in height, consisting of a guide rail (10) mounted on a structural member of the vehicle, such as the B-column, with a guide slot (15) with recesses for engagement of a locking means of a sledge-like slider or sledge (30) which supports the anchoring or deflection device that has a loop with a slot to lead the belt through, whereby the sledge (30) is fitted with plastic parts or plastic coatings on its sliding surface, and whereby the sledge (30) can be secured in the guide rail (10) by means of a break device (55) to prevent it from skidding down within the guide rail (10), characterized in that the guide rail (10) is provided with a number of equally or unequally spaced openings (111) for engagement in its base plate (11) with inclined parts (112) allocated to them for engagement with a free end (24) of a locking means that is rectangularly bent to form a catch (20), which is pivotally hinged to the sledge (30) in the form of a two-arm lever (21, 22) and the end (25) of which being opposite to the engaging end of the catch (24) being formed like an operating handle that forms an angle, that the sledge (30) in the path of the engaging end of the catch (24) has an opening (31) and is linked with a case-like plastic member (40) which is guided in a sliding manner on the base plate (11) of the guide rail (10), and which has an opening (43) congruent with the opening (31) in the sledge (30) and a chamber (41) on the side of the anchoring or deflection device to accomodate a pressure spring (42) which contacts the lever arm of the catch (21) which supports the engaging end of the catch (24), that the pintle (23) of the catch (20) is mounted in the plastic member (40), that the securing bolt (150) for the anchoring or deflection device (50) with the sledge (30) has, at its end which is directed to the sledge (30), a chamber (151) for a breaking device (55) consisting of a ball (153) contacted by a spring (152), whereby the plastic member (40) in the area of contact of the ball (153) is provided with an opening (44) which is dimensioned in such a way that one part (153a) of the ball (153) of the breaking device (55) passes through the opening (44) in the plastic member (40), and that the distance between the engaging end of the catch (24) and the spring-contacted ball (153) of the breaking device (55) approximately corresponds to the space between two engagement openings (111) of the equally spaced engagement openings in the base-plate (11) of the guide rail (10).

2. Anchoring or deflection device for a vehicle safety belt adjustable in height, consisting of a guide rail (210) mounted on a structural member of the vehicle, such as the B-column, with a guide slot with recesses for engagement of a locking means of a sledge-like slider or sledge (230) which supports the anchoring or deflection device that has a loop with a slot to lead the belt through, whereby the sledge (230) is fitted with plastic parts or plastic coatings on its sliding surface, and whereby the sledge can be secured in the guide rail (210) by means of a break device to prevent it from skidding down within the guide rail (210), characterized in that the guide rail (210) is provided with a number of equally or unequally spaced openings (311) for engagement in its base plate (211) with inclined parts (312) allocated to them for engagement with a free end (224) of a locking means that is rectangularly bent to form a catch (220), which is formed as a single-arm pivoting lever with a bent section (224a) towards the guide rail (210) and which is held by its lever (221) by means of a sliding and guide element (226) in a bearing (233) which is positioned on a slider (261) which is movable on the sledge (230) in the longitudinal direction of the guide rail, the slider, being linked with a pivotable lever (260), that the sledge (230) in the path of the engaging end (224) of the catch (220) has an opening (231) and is linked with a case-like plastic member (240) which is guided in a sliding manner on the base plate (211) of the guide rail (210), and which has an opening (243) in the base plate of the plastic member (240a) congruent with the opening (231) in the sledge (230) and a chamber (241) on the side of the anchoring or deflection device to accomodate a pressure spring (242) which contacts the lever arm (221) of the catch (220) that the lever (260) for the slide (261) is pivotably hinged in the plastic member (240) and has a cam (262) which is engaged with the slider (261) at its end which is directed towards the sledge (230), that an engaging element (270), such as locking hook, locking lever, locking bolt or the like, is located on the sledge (230) in the path of movement of the slider (261), which returns to the original position either automatically or by forcible actuation, the element (270) being arranged with one engaging section (271) in an opening (232) in the sledge (230) and with a further opening (244) in the plastic part (240) corresponding to this opening (232) in such a way that, upon displacement of the slider (261) by means of the lever (260), the engaging element (270) can be introduced by its free end into a clearance (275) which is formed by a number of spaced engagement openings (311) in the guide rail (210) and, upon retraction of the slider (261), automatically led out of the free space (275).

3. Anchoring or deflection device according to claim 2, characterized in that the engaging element (270) is formed like a locking hook with one section (272) lying on the slider (261) and one engaging section (271) which is rectangularly bent on it, the free end of which in the opening (232) is lying in the plastic part (240) in the opening (232) in the sledge and in the opening (244) corresponding to the opening (232), whereby the transition area between the two sections (271, 272) is formed by means of a semicircular bend directed towards the catch (220), being elastic, and arranged in the path of movement or advancement of the slider (261).

4. Anchoring device according to claims 2 and 3, characterized in that the catch (220) is held by its lever (221) on the slider (261), which is provided with a wedge-shaped recess (233) in which the catch (220) is held by means of a sliding element (226) sliding alongside the wall surfaces limiting the wedge-shaped recess (233) when the slider (261) is in motion.

FIG. 3

FIG.4